(19) Europäisches Patentamt / European Patent Office / Office européen des brevets

(11) **EP 4 349 150 A1**

(12) **EUROPEAN PATENT APPLICATION**
published in accordance with Art. 153(4) EPC

(43) Date of publication:
**10.04.2024 Bulletin 2024/15**

(21) Application number: **22815306.0**

(22) Date of filing: **01.06.2022**

(51) International Patent Classification (IPC):
**A01D 34/00** *(2006.01)*

(52) Cooperative Patent Classification (CPC):
**A01D 34/00**

(86) International application number:
**PCT/CN2022/096567**

(87) International publication number:
**WO 2022/253264 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2021 CN 202110615734**

(71) Applicant: **Positec Power Tools (Suzhou) Co., Ltd.
Suzhou, Jiangsu 215123 (CN)**

(72) Inventor: **FEDERICO, Testolin
36100 Vicenza (IT)**

(74) Representative: **Kilburn & Strode LLP
Lacon London
84 Theobalds Road
Holborn
London WC1X 8NL (GB)**

(54) **INTELLIGENT MOWER CONTROL METHOD AND APPARATUS, INTELLIGENT MOWER, AND COMPUTER DEVICE**

(57) This application relates to a method and an apparatus for controlling an intelligent lawn mower, an intelligent lawn mower, a computer device, and a storage medium. In the method, output torque of a mowing motor during working of the intelligent lawn mower is detected, a wheel rotation speed of the intelligent lawn mower is reduced when the output torque reaches a first set threshold, and the intelligent lawn mower is controlled to operate based on the reduced wheel rotation speed, so that a blade rotation speed remains unchanged. This not only improves mowing quality, but also effectively protects the mowing motor, thereby improving a service life of the mowing motor.

FIG. 1

## Description

## BACKGROUND

### Technical Field

This application relates to the field of automatic control technologies, and in particular, to a method and an apparatus for controlling an intelligent lawn mower, an intelligent lawn mower, and a computer device.

### Related Art

With the progress of science and technology and the improvement of people's living standards, people's demand for greening is also increasing, and lawns have become extremely important greening whether in public places or in private residences. As a tool for mowing lawns, intelligent lawn mowers are more and more widely used.

In a conventional technology, during working of an intelligent lawn mower, a constant mowing speed, mowing height, and traveling speed are used to correspondingly perform a mowing task. However, when a depth of grass plants in the lawn is large, or a density of the grass plants is high, resistance to a mowing motor increases, which can easily lead to an excessive current of the mowing motor. In this case, the intelligent lawn mower decreases a driving speed to protect components of the intelligent lawn mower, thereby forcing a blade rotation speed of the mowing motor to decrease. Moreover, after a period of time, the intelligent lawn mower stops due to overheating protection of the mowing motor. This not only affects mowing quality, but also reduces a service life of the mowing motor.

## SUMMARY

Based on this, for the foregoing problem that the conventional method for controlling an intelligent lawn mower affects mowing quality and a service life of a mowing motor, it is necessary to provide a method and an apparatus for controlling an intelligent lawn mower, an intelligent lawn mower, a computer device, and a storage medium, so that the mowing quality and the service life of the mowing motor can be effectively ensured.

A method for controlling an intelligent lawn mower is provided. The method includes:

detecting output torque of a mowing motor during working of the intelligent lawn mower; and

reducing a wheel rotation speed of the intelligent lawn mower if the output torque reaches a first set threshold, and controlling the intelligent lawn mower to operate based on the reduced wheel rotation speed.

In an embodiment, after the reducing a wheel rotation speed of the intelligent lawn mower, the method further includes: controlling the wheel rotation speed of the intelligent lawn mower to increase to a set wheel rotation speed if the output torque of the mowing motor reaches a second set threshold, where the second set threshold is less than the first set threshold.

In an embodiment, the controlling the wheel rotation speed of the intelligent lawn mower to increase to a set wheel rotation speed includes: controlling the wheel rotation speed of the intelligent lawn mower to increase to the set wheel rotation speed based on a set acceleration slope.

In an embodiment, after the reducing a wheel rotation speed of the intelligent lawn mower, the method further includes: replanning a moving path of the intelligent lawn mower if the output torque is not less than the first set threshold.

In an embodiment, a method for determining that the output torque is not less than the first set threshold includes: detecting a blade rotation speed of a blade driven by the mowing motor; and determining that the output torque is not less than the first set threshold if the blade rotation speed is less than a target blade rotation speed.

In an embodiment, the replanning a moving path of the intelligent lawn mower includes: controlling the intelligent lawn mower to retreat by a preset distance, and adjusting an advancing direction of the intelligent lawn mower; and controlling the intelligent lawn mower to move in an adjusted advancing direction.

In an embodiment, the reducing a wheel rotation speed of the intelligent lawn mower if the output torque reaches a first set threshold includes: determining a deceleration coefficient of the wheel rotation speed based on a set deceleration percentage of the wheel rotation speed, the output torque, and the first set threshold if the output torque reaches the first set threshold; determining, according to the wheel rotation speed of the intelligent lawn mower and the deceleration coefficient, a target wheel rotation speed to which the wheel rotation speed of the intelligent lawn mower is to be reduced; and controlling the wheel rotation speed of the intelligent lawn mower to reduce to the target wheel rotation speed based on a set deceleration slope.

In an embodiment, the determining a deceleration coefficient of the wheel rotation speed based on a set deceleration percentage of the wheel rotation speed, the output torque, and the first set threshold includes: determining a first difference between the output torque and the first set threshold; determining, based on maximum output torque of the mowing motor, a second difference between the maximum output torque and the first set threshold; obtaining a ratio of the first difference to the second difference; and calculating a product of the ratio and the set deceleration percentage, and determining the product as the deceleration coefficient of the wheel rotation speed.

In an embodiment, the determining , according to the wheel rotation speed of the intelligent lawn mower and the deceleration coefficient, a target wheel rotation speed to which the wheel rotation speed of the intelligent lawn mower is to be reduced includes: determining a wheel rotation speed by which the intelligent lawn mower reduces according to the wheel rotation speed of the intelligent lawn mower and the deceleration coefficient; and determining a difference between the wheel rotation speed of the intelligent lawn mower and the wheel rotation speed by which the intelligent lawn mower reduces as the target wheel rotation speed of the intelligent lawn mower after the deceleration.

An apparatus for controlling an intelligent lawn mower is provided. The apparatus includes:

a detection module, configured to detect output torque of a mowing motor during working of the intelligent lawn mower; and
a control module, configured to reduce a wheel rotation speed of the intelligent lawn mower if the output torque reaches a first set threshold, and control the intelligent lawn mower to operate based on the reduced wheel rotation speed.

An intelligent lawn mower is provided. The intelligent lawn mower automatically moves and works in a working region limited by a boundary line. The intelligent lawn mower includes: a data acquisition sensor and a controller that are interconnected. The data acquisition sensor is configured to acquire output torque of a mowing motor during working of the intelligent lawn mower. The controller is configured to reduce a wheel rotation speed of the intelligent lawn mower when the output torque acquired by the data acquisition sensor reaches a first set threshold, and control the intelligent lawn mower to operate based on the reduced wheel rotation speed.

A computer device is provided, including a memory and a processor. The memory stores a computer program, and the processor, implements steps of the method described above when executing the computer program.

A computer-readable storage medium is provided, storing a computer program, where the computer program, when executed by a processor, implements steps of the method described above.

Through the method and the apparatus for controlling an intelligent lawn mower, the intelligent lawn mower, the computer device, and the storage medium, the output torque of the mowing motor during working of the intelligent lawn mower is detected, the wheel rotation speed of the intelligent lawn mower is reduced when the output torque reaches the first set threshold, and the intelligent lawn mower is controlled to operate based on the reduced wheel rotation speed, so that the blade rotation speed remains unchanged. This not only improves the mowing quality, but also effectively protects the mowing motor, thereby improving the service life of the mowing motor.

## BRIEF DESCRIPTION OF THE DRAWINGS

FIG. 1 is a schematic flowchart of a method for controlling an intelligent lawn mower according to an embodiment;

FIG. 2 is a schematic flowchart of steps of reducing a wheel rotation speed of an intelligent lawn mower according to an embodiment;

FIG. 3 is a schematic flowchart of a method for controlling an intelligent lawn mower according to another embodiment;

FIG. 4 is a schematic flowchart of a method for controlling an intelligent lawn mower according to still another embodiment;

FIG. 5 is a block diagram of a structure of an apparatus for controlling an intelligent lawn mower according to an embodiment;

FIG. 6 is a block diagram of an internal structure of an intelligent lawn mower according to an embodiment; and

FIG. 7 is a diagram of an internal structure of a computer device according to an embodiment.

## DETAILED DESCRIPTION

To make the objectives, technical solutions, and advantages of this application clearer and more understandable, this application is further described in detail below with reference to accompanying drawings and embodiments. It should be understood that the specific embodiments described herein are only used for explaining this application, and are not used for limiting this application.

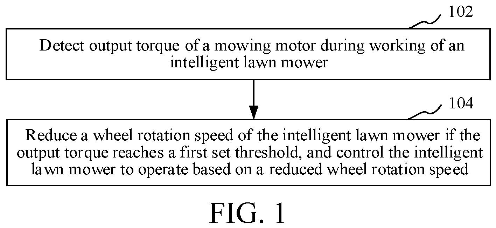

In an embodiment, as shown in FIG. 1, a method for controlling an intelligent lawn mower is provided, including the following steps:
Step 102: Detect output torque of a mowing motor during working of an intelligent lawn mower.

The mowing motor is a power source in the intelligent lawn mower that drives a mowing blade to operate to cut grass plants.

It should be noted that the output torque can be understood as a load in a broad sense, for example, a blade rotation speed or blade output torque; or can be understood as, for example, torque caused by strain in a narrow sense.

In an embodiment, the output torque of the mowing motor is related to a corresponding motor rotation speed and power, and therefore, the output torque of the mowing motor can be calculated by monitoring the motor rotation speed and the power of the mowing motor. For example, the output torque of the mowing motor is related to the corresponding motor rotation speed and power, and the power is related to a current. Therefore, the output torque of the mowing motor can be calculated according to the motor rotation speed and the current by monitoring the motor rotation speed and the current of the mowing motor. In addition, torque causes certain strain on a drive shaft, and there is a proportional relationship between the strain and the torque. Therefore, the output torque can alternatively be determined by detecting the strain of the drive shaft corresponding to the mowing motor. Certainly, the output torque of the mowing motor can alternatively be directly measured by using a torque sensor. Specifically, the torque sensor converts a physical change of a torque force into an accurate electrical signal, and then reads or transfers torque through the electrical signal.

In another embodiment, the output torque of the mowing motor is related to the current, for example, the output torque can be a function of the current, and the current can be acquired through a current detection module, such as an analog-to-digital converter (ADC) or a current sensor, to obtain the output torque, for example, the output torque can be obtained through integral calculation. In this embodiment, the output torque of the mowing motor during working of the intelligent lawn mower can be periodically detected, and the intelligent lawn mower is controlled by using subsequent steps based on detected output torque. It can be understood that a specific method for detecting output torque is not limited in this embodiment.

Step 104: Reduce a wheel rotation speed of the intelligent lawn mower if the output torque reaches a first set threshold, and control the intelligent lawn mower to operate based on the reduced wheel rotation speed.

The first set threshold is a preset torque threshold when the mowing motor normally works, and can be set based on maximum output torque when the mowing motor normally works. For example, if the output torque of the mowing motor excesses the first set threshold, the mowing motor enters an abnormal working state. When a depth of grass plants is large or a density of the grass plants is high, resistance to the mowing motor increases, which can easily lead to an excessive current of the mowing motor and force a blade rotation speed of the mowing motor to decrease. Whether the current increases or the blade rotation speed decreases, the output torque of the mowing motor is directly affected, causing the output torque to increase. In addition, the increase in the current affects a service life of the mowing motor, and the decrease in the blade rotation speed affects mowing quality. Therefore, in this embodiment, the first set threshold of the output torque when the mowing motor normally works is set, and when it is detected that the output torque of the mowing motor reaches the first set threshold, a wheel rotation speed of the intelligent lawn mower is reduced to control the intelligent lawn mower to operate, so that the blade rotation speed remains unchanged.

In the method for controlling an intelligent lawn mower, the output torque of the mowing motor during working of the intelligent lawn mower is detected, the wheel rotation speed of the intelligent lawn mower is reduced when the output torque reaches the first set threshold, and the intelligent lawn mower is controlled to operate based on the reduced wheel rotation speed, so that the blade rotation speed remains unchanged. This not only improves the mowing quality, but also effectively protects the mowing motor, thereby improving the service life of the mowing motor.

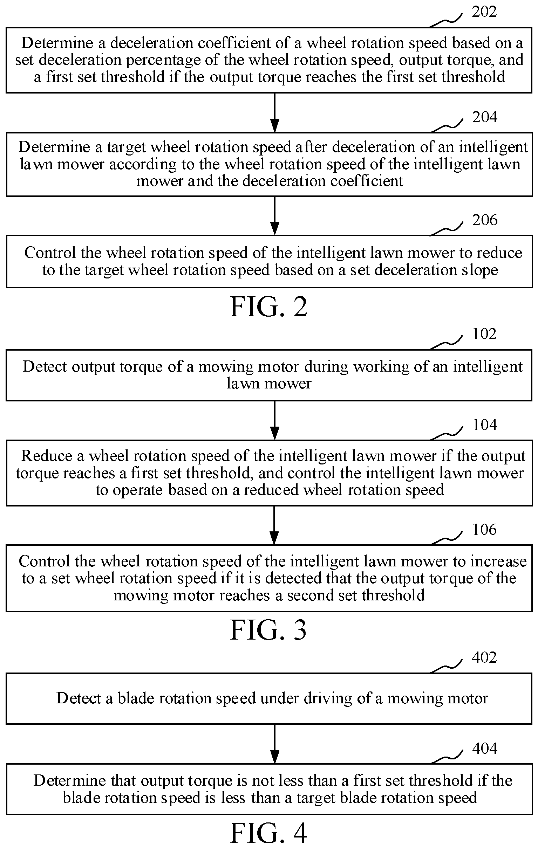

In an embodiment, as shown in FIG. 2, in step 104, if the output torque reaches the first set threshold, the wheel rotation speed of the intelligent lawn mower is reduced, which can be specifically implemented through the following steps:

Step 202: Determine a deceleration coefficient of the wheel rotation speed based on a set deceleration percentage of the wheel rotation speed, the output torque, and the first set threshold if the output torque reaches the first set threshold.

The set deceleration percentage is a preset deceleration percentage of the wheel rotation speed, and specifically, can be a maximum deceleration percentage of the wheel rotation speed. The deceleration coefficient is a percentage by which the wheel rotation speed before deceleration needs to reduce relative to a finally determined wheel rotation speed after the deceleration. In this embodiment, the deceleration coefficient of the wheel rotation speed can be calculated based on the set deceleration percentage of the wheel rotation speed, the output torque, and the first set threshold by using a predefined calculation formula.

Specifically, a first difference between the output torque and the first set threshold is calculated, a second difference between the maximum output torque and the first set threshold is calculated based on the maximum output torque of the mowing motor, a ratio of the first difference to the second difference is then calculated, a product of the ratio and the set deceleration percentage is calculated, and the obtained product is determined as the deceleration coefficient of the wheel rotation speed. The maximum output torque of the mowing motor can be the torque threshold when the mowing motor normally works, and when the mowing motor is at the maximum output torque, the mowing motor possibly enters an abnormal working state. Therefore, to ensure normal operation of the mowing motor, in this embodiment, the first set threshold less than the maximum output torque can be set.

Step 204: Determine, according to the wheel rotation speed of the intelligent lawn mower and the deceleration coefficient, a target wheel rotation speed to which the wheel rotation speed of the intelligent lawn mower is to be reduced.

The wheel rotation speed of the intelligent lawn mower can be a wheel rotation speed of the intelligent lawn mower measured when it is detected that the output torque of the mowing motor reaches the first set threshold, or can be a preset wheel rotation speed when the intelligent lawn mower normally works. This is not limited in this embodiment. In this embodiment, according to the obtained deceleration coefficient of the wheel rotation speed and the wheel rotation speed of the intelligent lawn mower, a wheel rotation speed by which the intelligent lawn mower needs to reduce can be calculated. Further, a difference between the wheel rotation speed of the intelligent lawn mower and the wheel rotation speed by which the intelligent lawn mower needs to reduce is calculated, and the difference is determined as the target wheel rotation speed after the deceleration of the intelligent lawn mower.

Step 206: Control the wheel rotation speed of the intelligent lawn mower to reduce to the target wheel rotation speed based on a set deceleration slope.

A deceleration slope reflects a speed at which the wheel rotation speed of the intelligent lawn mower decreases. In this embodiment, to improve stability of the intelligent lawn mower, the deceleration slope can be preset. After the target wheel rotation speed to which the wheel rotation speed of the intelligent lawn mower is to be reduced is determined by using the foregoing steps, the intelligent lawn mower can be controlled based on the preset deceleration slope to reduce the wheel rotation speed to the target wheel rotation speed, so that the intelligent lawn mower can maintain good stability during the deceleration.

In an embodiment, as shown in FIG. 3, after the wheel rotation speed of the intelligent lawn mower is reduced, the method further includes the following steps: Step 106: Control the wheel rotation speed of the intelligent lawn mower to increase to a set wheel rotation speed if it is detected that the output torque of the mowing motor reaches a second set threshold.

The second set threshold is also a preset torque threshold when the mowing motor normally works, and can be set based on normal output torque when the mowing motor normally works. For example, if the output torque of the mowing motor is less than the second set threshold, it indicates that the intelligent lawn mower enters a normal working region, that is, the intelligent lawn mower has passed through a region of grass plants with a large depth or a high density. The set wheel rotation speed can be a preset wheel rotation speed when the intelligent lawn mower normally works, or can be a wheel rotation speed recoded before the deceleration of the intelligent lawn mower.

Specifically, the second set threshold is less than the first set threshold. In this embodiment, after the wheel rotation speed of the intelligent lawn mower is reduced, if it is detected that the output torque of the mowing motor reaches the second set threshold, that is, the output torque of the intelligent lawn mower is reduced to the second set threshold, it indicates that the intelligent lawn mower has entered the normal working region. To ensure mowing efficiency of the intelligent lawn mower, the wheel rotation speed of the intelligent lawn mower can be increased in this case. Specifically, the wheel rotation speed of the intelligent lawn mower can be controlled to increase to the set wheel rotation speed, to improve the mowing efficiency of the intelligent lawn mower.

In an embodiment, the wheel rotation speed of the intelligent lawn mower is controlled to increase to the set wheel rotation speed, and specifically, the wheel rotation speed of the intelligent lawn mower can be controlled to increase to the set wheel rotation speed based on a set acceleration slope.

An acceleration slope reflects a speed at which the wheel rotation speed of the intelligent lawn mower increases. In this embodiment, to ensure the stability of the intelligent lawn mower, the acceleration slope can alternatively be preset, so that when it is detected that the output torque of the mowing motor reaches the second set threshold, the intelligent lawn mower can be controlled to increase the wheel rotation speed to the set wheel rotation speed based on the preset acceleration slope. The vehicle speed is steadily increased, so that the intelligent lawn mower can maintain good stability during acceleration.

In an embodiment, the output torque of the mowing motor is periodically detected during working of the intelligent lawn mower, to control the intelligent lawn mower in real time. Therefore, when the wheel rotation speed of the intelligent lawn mower is reduced, if it is detected that the output torque of the intelligent lawn mower is still not less than the first set threshold, a moving path of the intelligent lawn mower is replanned.

As shown in FIG. 4, a method for determining that the output torque is not less than the first set threshold can include the following steps: Step 402: Detect a blade rotation speed of a blade driven by the mowing motor.

The blade rotation speed refers to a number of revolutions of a mowing blade along an axial center per unit time driven by the mowing motor. The unit is rpm, usually expressed as r/S (revolutions per second) or r/min (revolutions per minute). Specifically, the blade rotation speed can be directly detected by a sensor, or can be calculated by acquiring relevant physical data, and this is not limited in this embodiment.

Step 404: Determine that the output torque is not less than the first set threshold if the blade rotation speed is less than a target blade rotation speed.

The target blade rotation speed is a minimum rotation speed of the blade when the mowing motor normally works, or can be another value determined based on the minimum rotation speed. The moving path is a moving route of the intelligent lawn mower. In this embodiment, after the wheel rotation speed of the intelligent lawn mower is reduced, if it is detected that the blade rotation speed of the intelligent lawn mower is less than the target blade rotation speed, it indicates that the output torque is still large. In other words, it can be determined that the output torque is not less than the first set threshold. In this case, the intelligent lawn mower can be subject to large resistance, such as hitting a large tree or a similar obstacle. Therefore, the moving path of the intelligent lawn mower needs to be replanned, so that the intelligent lawn mower can normally work.

Specifically, the moving path of the intelligent lawn mower can be replanned in the following manner. For example, the intelligent lawn mower can be controlled to retreat by a preset distance, and an advancing direction of the intelligent lawn mower is adjusted, that is, an angle of the intelligent lawn mower relative to an original path is changed. Certainly, the angle of the intelligent lawn mower relative to the original path can alternatively be adjusted while the intelligent lawn mower is controlled to retreat, to adjust a direction of the intelligent lawn mower, and the intelligent lawn mower is controlled to advance in an adjusted direction, to change the original moving path of the intelligent lawn mower, thereby avoiding an obstacle with large resistance. In this way, the intelligent lawn mower can normally work.

In an embodiment, a specific implementation process of reducing the wheel rotation speed of the intelligent lawn mower in the foregoing embodiments is further described by using a specific embodiment. In this embodiment, assuming that the maximum output torque of the mowing motor is T, the first set threshold is 90% of T, and the set deceleration percentage of the wheel rotation speed is 75%, if it is detected that the output torque of the mowing motor is 95% of T, the output torque of the mowing motor reaches the first set threshold. Therefore, the parameters are substituted, and the deceleration coefficient A of the wheel rotation speed is calculated by using the following formula:

$$A = \frac{95\% \times T - 90\% \times T}{T - 90\% \times T} \times 75\%$$

The deceleration coefficient A of the wheel rotation speed is calculated to be 37.5%. In other words, in this case, the wheel rotation speed needs to reduce by 37.5%.

If the wheel rotation speed is 33 rpm when the intelligent lawn mower normally works, the wheel rotation speed D by which the intelligent lawn mower needs to reduce based on the obtained deceleration coefficient 37.5% can be calculated, and D = 33 x 37.5%. Therefore, the target wheel rotation speed after the deceleration of the intelligent lawn mower is $V = 33 - D$. The wheel rotation speed of the intelligent lawn mower is then controlled to reduce to the target wheel rotation speed. During the deceleration, to improve the stability of the intelligent lawn mower, the deceleration process of the intelligent lawn mower can be controlled based on the deceleration slope. It can be understood that parameter values in the embodiments are only used for describing the principle of this application, and are not intended to limit the scope of this application. Different parameter values can be set according to requirements in actual application.

It should be understood that although the steps in the flowcharts in FIG. 1 to FIG. 4 are shown sequentially according to indication of arrows, the steps are not necessarily performed in a sequence indicated by the arrows. Unless otherwise clearly specified in this specification, the steps are performed without any strict sequence limit, and can be performed in other sequences. Moreover, at least some steps in FIG. 1 to FIG. 4 can include a plurality of steps or a plurality of stages. The steps or the stages are not necessarily performed at the same moment, and can be performed at different moments. The steps or the stages are not necessarily performed in sequence, and can be performed in turn or alternately with other steps or at least some of steps or stages of other steps.

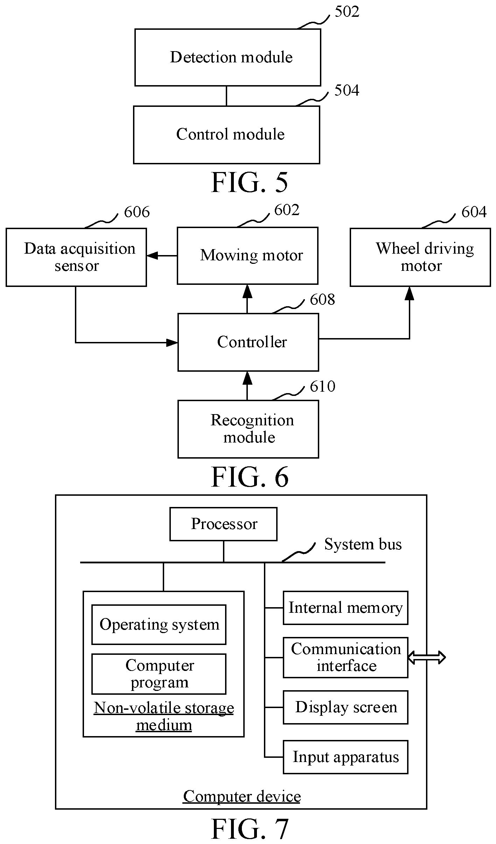

In an embodiment, as shown in FIG. 5, an apparatus for controlling an intelligent lawn mower is provided, including: a detection module 502 and a control module 504.

The detection module 502 is configured to detect output torque of a mowing motor during working of the intelligent lawn mower; and
the control module 504 is configured to reduce a wheel rotation speed of the intelligent lawn mower if the output torque reaches a first set threshold, and control the intelligent lawn mower to operate based on the reduced wheel rotation speed.

In an embodiment, the control module is further configured to: control the wheel rotation speed of the intelligent lawn mower to increase to a set wheel rotation speed if it is detected that the output torque of the mowing motor reaches a second set threshold.

In an embodiment, the control module is further configured to: control the wheel rotation speed of the intelligent lawn mower to increase to the set wheel rotation speed based on a set acceleration slope.

In an embodiment, a path planning module is further included, and is configured to: replan, after reducing the wheel rotation speed of the intelligent lawn mower, a moving path of the intelligent lawn mower if it is detected that the output torque is not less than the first set threshold.

In an embodiment, the detection module is further configured to detect a blade rotation speed of a blade driven by the mowing motor; and determine that the output torque is not less than the first set threshold if the blade rotation speed is less than a target blade rotation speed.

In an embodiment, the path planning module is specifically configured to: control the intelligent lawn mower to retreat by a preset distance, and adjust an advancing direction of the intelligent lawn mower; and control the intelligent lawn mower to move in an adjusted advancing direction.

In an embodiment, the control module is specifically configured to: determine a deceleration coefficient of the wheel rotation speed based on a set deceleration percentage of the wheel rotation speed, the output torque, and the first set threshold if the output torque reaches the first set threshold; determine, according to the wheel rotation speed of the intelligent lawn mower and the deceleration coefficient, a target wheel rotation speed to which the wheel rotation speed of the intelligent lawn mower is to be reduced; and control the wheel rotation speed of the intelligent lawn mower to reduce to the target wheel rotation speed based on a set deceleration slope.

In an embodiment, the control module is specifically further configured to: determine a first difference between the output torque and the first set threshold; determine, based on maximum output torque of the mowing motor, a second difference between the maximum output torque and the first set threshold; obtain a ratio of the first difference to the second difference; and calculate a product of the ratio and the set deceleration percentage, and determine the product as the deceleration coefficient of the wheel rotation speed.

In an embodiment, the control module is specifically further configured to: determine a wheel rotation speed by which the intelligent lawn mower reduces according to the wheel rotation speed of the intelligent lawn mower and the deceleration coefficient; and determine a difference between the wheel rotation speed of the intelligent lawn mower and the wheel rotation speed by which the intelligent lawn mower reduces as the target wheel rotation speed of the intelligent lawn mower after the deceleration.

In an embodiment, an intelligent lawn mower is further provided, and automatically moves and works in a working region limited by a boundary line. The boundary line can be a physical boundary such as a fence or a wire, or can be a virtual boundary different from the physical boundary. As shown in FIG. 6, a mowing motor 602, a wheel driving motor 604, and a data acquisition sensor 606 and a controller 608 that are interconnected are included. The data acquisition sensor 606 is configured to acquire output torque of the mowing motor 602 during working of the intelligent lawn mower, the controller 608 is configured to control the wheel driving motor 604 to reduce a wheel rotation speed of the intelligent lawn mower when the output torque acquired by the data acquisition sensor 606 reaches a first set threshold, and control the intelligent lawn mower to operate based on the reduced wheel rotation speed.

In an embodiment, the intelligent lawn mower is equipped with a recognition module 610. The recognition module 610 is connected to the controller 608. The recognition module can be configured to recognize the boundary line, and send the recognized boundary line to the controller 608, so that the controller 608 can control moving of the intelligent lawn mower according to recognition information of the recognition module 610.

In an embodiment, the recognition module 610 can be, for example, a visual sensor that recognizes the boundary line visually; or can be a magnetic sensor that recognizes a boundary by detecting a magnetic field generated by energizing a wire.

For a specific limitation on the apparatus for controlling an intelligent lawn mower and the intelligent lawn mower, refer to the limitation on the method for controlling an intelligent lawn mower above. Details are not described herein again. The modules in the foregoing apparatus for controlling an intelligent lawn mower can be implemented entirely or partially by software, hardware, or a combination thereof. The foregoing modules can be built in or independent of a processor of a computer device in a hardware form, or can be stored in a memory of the computer device in a software form, so that the processor invokes and performs an operation corresponding to each of the foregoing modules.

In an embodiment, a computer device is provided. The computer device can be a terminal, and an internal structural diagram thereof can be shown in FIG. 7. The computer device includes a processor, a memory, a network interface, a display screen, and an input apparatus that are connected by a system bus. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The communication interface of the computer device is configured to perform communication with an external terminal in a wired or wireless manner, and the wireless manner can be implemented by using Wi-Fi, an operator network, NFC (near field communication), or other technologies. The computer program, when executed by the processor, implements a method for controlling an intelligent lawn mower. The display screen of the computer device can be a liquid crystal display screen or an electronic ink display screen. The input apparatus of the computer device can be a touch layer covering the display screen, or can be a key, a trackball, or a touch pad disposed on a housing of the computer device, or can be an external keyboard, touch pad, mouse, or the like.

A person skilled in the art can understand that, the structure shown in FIG. 7 is only a block diagram of a part of a structure related to a solution of this application and does not limit the computer device to which the solution of this application is applied. Specifically, the computer device can include more or fewer components than those in the drawings, or include a combination of some components, or include a different component deployment.

In an embodiment, a computer device is provided, including a memory and a processor. The memory stores a computer program, and the processor, when executing the computer program, implements the following steps:

detecting output torque of a mowing motor during working of the intelligent lawn mower; and

reducing a wheel rotation speed of the intelligent lawn mower if the output torque reaches a first set threshold, and controlling the intelligent lawn mower to operate based on the reduced wheel rotation speed.

In an embodiment, the processor, when executing the computer program, further implements the following step: controlling, after reducing the wheel rotation speed of the intelligent lawn mower, the wheel rotation speed of the intelligent lawn mower to increase to a set wheel rotation speed if it is detected that the output torque of the mowing motor reaches a second set threshold, where the second set threshold is less than the first set threshold.

In an embodiment, the processor, when executing the computer program, further implements the following step: controlling the wheel rotation speed of the intelligent lawn mower to increase to the set wheel rotation speed based on a set acceleration slope.

In an embodiment, the processor, when executing the computer program, further implements the following step: replanning, after reducing the wheel rotation speed of the intelligent lawn mower, a moving path of the intelligent lawn mower if the output torque is not less than the first set threshold.

In an embodiment, the processor, when executing the computer program, further implements the following steps: detecting a blade rotation speed of a blade driven by the mowing motor; and determining that the output torque is not less than the first set threshold if the blade rotation speed is less than a target blade rotation speed.

In an embodiment, the processor, when executing the computer program, further implements the following steps: controlling the intelligent lawn mower to retreat by a preset distance, and adjusting an advancing direction of the intelligent lawn mower; and controlling the intelligent lawn mower to move in an adjusted advancing direction.

In an embodiment, the processor, when executing the computer program, further implements the following steps: determining a deceleration coefficient of the wheel rotation speed based on a set deceleration percentage of the wheel rotation speed, the output torque, and the first set threshold if the output torque reaches the first set threshold; determining, according to the wheel rotation speed of the intelligent lawn mower and the deceleration coefficient, a target wheel rotation speed to which the wheel rotation speed of the intelligent lawn mower is to be reduced; and controlling the wheel rotation speed of the intelligent lawn mower to reduce to the target wheel rotation speed based on a set deceleration slope.

In an embodiment, the processor, when executing the computer program, further implements the following steps: determining a first difference between the output torque and the first set threshold; determining, based on maximum output torque of the mowing motor, a second difference between the maximum output torque and the first set threshold; obtaining a ratio of the first difference to the second difference; and calculating a product of the ratio and the set deceleration percentage, and determining the product as the deceleration coefficient of the wheel rotation speed.

In an embodiment, the processor, when executing the computer program, further implements the following steps: determining a wheel rotation speed by which the intelligent lawn mower reduces according to the wheel rotation speed of the intelligent lawn mower and the deceleration coefficient; and determining a difference between the wheel rotation speed of the intelligent lawn mower and the wheel rotation speed by which the intelligent lawn mower reduces as the target wheel rotation speed of the intelligent lawn mower after the deceleration.

In an embodiment, a computer-readable storage medium is provided, storing a computer program. The computer program, when executed by a processor, implements the following steps:

detecting output torque of a mowing motor during working of the intelligent lawn mower; and

reducing a wheel rotation speed of the intelligent lawn mower if the output torque reaches a first set threshold, and controlling the intelligent lawn mower to operate based on the reduced wheel rotation speed.

In an embodiment, the computer program, when executed by the processor, further implements the following step: controlling the wheel rotation speed of the intelligent lawn mower to increase to a set wheel rotation speed if it is detected that the output torque of the mowing motor reaches a second set threshold, after reducing the wheel rotation speed of the intelligent lawn mower.

In an embodiment, the computer program, when executed by the processor, further implements the following step: controlling the wheel rotation speed of the intelligent lawn mower to increase to the set wheel rotation speed based on a set acceleration slope.

In an embodiment, the computer program, when executed by the processor, further implements the following step: replanning, after reducing the wheel rotation speed of the intelligent lawn mower, a moving path of the intelligent lawn mower if the output torque is not less than the first set threshold.

In an embodiment, the computer program, when executed by the processor, further implements the following steps: detecting a blade rotation speed of a blade driven by the mowing motor; and determining that the output torque is not less than the first set threshold if the blade rotation speed is less than a target blade rotation speed.

In an embodiment, the computer program, when executed by the processor, further implements the following steps: controlling the intelligent lawn mower to retreat by a preset distance, and adjusting an advancing direction of the intelligent lawn mower; and controlling the intelligent lawn mower to move in an adjusted advancing direction.

In an embodiment, the computer program, when executed by the processor, further implements the following steps: determining a deceleration coefficient of the wheel rotation speed based on a set deceleration percentage of the wheel rotation speed, the output torque, and the first set threshold if the output torque reaches the first set threshold; determining, according to the wheel rotation speed of the intelligent lawn mower and the deceleration coefficient, a target wheel rotation speed to which the wheel rotation speed of the intelligent lawn mower is to be reduced; and controlling the wheel rotation speed of the intelligent lawn mower to reduce to the target wheel rotation speed based on a set deceleration slope.

In an embodiment, the computer program, when executed by the processor, further implements the following steps: determining a first difference between the output torque and the first set threshold; determining, based on maximum output torque of the mowing motor, a second difference between the maximum output torque and the first set threshold; obtaining a ratio of the first difference to the second difference; and calculating a product of the ratio and the set deceleration percentage, and determining the product as the deceleration coefficient of the wheel rotation speed.

In an embodiment, the computer program, when executed by the processor, further implements the following steps: determining a wheel rotation speed by which the intelligent lawn mower reduces according to the wheel rotation speed of the intelligent lawn mower and the deceleration coefficient; and determining a difference between the wheel rotation speed of the intelligent lawn mower and the wheel rotation speed by which the intelligent lawn mower reduces as the target wheel rotation speed of the intelligent lawn mower after the deceleration.

A person of ordinary skill in the art can understand that all or some of procedures of the method in the foregoing embodiments can be implemented by a computer program instructing relevant hardware. The computer program can be stored in a non-volatile computer-readable storage medium. When the computer program is executed, the procedures of the foregoing method embodiments can be implemented. Any reference to a memory, a storage, a database, or another medium used in the embodiments provided in this application can include at least one of a non-volatile memory and a volatile memory. The non-volatile memory can include a read-only memory (ROM), a magnetic tape, a floppy disk, a flash memory, an optical memory, and the like. The volatile memory can include a random access memory (RAM) or an external cache. For the purpose of description instead of limitation, the RAM can be in a plurality of forms, such as a static random access memory (SRAM) or a dynamic random access memory (DRAM).

The technical features in the foregoing embodiments can be randomly combined. For brevity of description, not all possible combinations of the technical features in the embodiments are described. However, provided that combinations of the technical features do not conflict with each other, the combinations of the technical features are considered as falling within the scope recorded in this specification.

The foregoing embodiments only describe several implementations of this application specifically and in detail, but cannot be construed as a limitation to the patent scope of this application. It should be noted that a person of ordinary skill in the art can make various changes and improvements without departing from the idea of this application, and these changes and improvements shall all fall within the protection scope of this application. Therefore, the protection scope of the patent of this application shall be subject to the appended claims.

**Claims**

1. A method for controlling an intelligent lawn mower, comprising:

   detecting output torque of a mowing motor during working of the intelligent lawn mower; and
   reducing a wheel rotation speed of the intelligent lawn mower if the output torque reaches a first set threshold, and controlling the intelligent lawn mower to operate based on the reduced wheel rotation speed.

2. The method according to claim 1, wherein after the reducing a wheel rotation speed of the intelligent lawn mower, the method further comprises:
   controlling the wheel rotation speed of the intelligent lawn mower to increase to a set wheel rotation speed if the output torque of the mowing motor reaches a second set threshold, wherein the second set threshold is less than the first set threshold.

3. The method according to claim 2, wherein the controlling the wheel rotation speed of the intelligent lawn mower to increase to a set wheel rotation speed comprises:
   controlling the wheel rotation speed of the intelligent lawn mower to increase to the set wheel rotation speed based on a set acceleration slope.

4. The method according to claim 1, wherein after the reducing a wheel rotation speed of the intelligent lawn mower, the method further comprises: replanning a moving path of the intelligent lawn mower if the output torque is not less than the first set threshold.

5. The method according to claim 4, wherein the method further comprises:

   detecting a blade rotation speed of a blade driven by the mowing motor; and
   determining that the output torque is not less than the first set threshold if the blade rotation speed is less than a target blade rotation speed.

6. The method according to claim 4, wherein the replanning a moving path of the intelligent lawn mower comprises:

   controlling the intelligent lawn mower to retreat by a preset distance, and adjusting an advancing direction of the intelligent lawn mower; and
   controlling the intelligent lawn mower to move in an adjusted advancing direction.

7. The method according to any one of claims 1 to 6, wherein the reducing a wheel rotation speed of the intelligent lawn mower if the output torque reaches a first set threshold comprises:

   determining a deceleration coefficient of the wheel rotation speed based on a set deceleration percentage of the wheel rotation speed, the output torque, and the first set threshold if the output torque reaches the first set threshold;
   determining, according to the wheel rotation speed of the intelligent lawn mower and the deceleration coefficient, a target wheel rotation speed to which the wheel rotation speed of the intelligent lawn mower is to be reduced; and
   controlling the wheel rotation speed of the intelligent lawn mower to reduce to the target wheel rotation speed based on a set deceleration slope.

8. The method according to claim 7, wherein the determining a deceleration coefficient of the wheel rotation speed based on a set deceleration percentage of the wheel rotation speed, the output torque, and the first set threshold comprises:

   determining a first difference between the output torque and the first set threshold;
   determining, based on maximum output torque of the mowing motor, a second difference between the maximum output torque and the first set threshold;
   obtaining a ratio of the first difference to the second difference; and
   calculating a product of the ratio and the set deceleration percentage, and determining the product as the deceleration coefficient of the wheel rotation speed.

9. The method according to claim 7, wherein the determining, according to the wheel rotation speed of the intelligent lawn mower and the deceleration coefficient, a target wheel rotation speed to which the wheel rotation speed of the intelligent lawn mower is to be reduced comprises:

   determining a wheel rotation speed by which the intelligent lawn mower reduces according to the wheel rotation speed of the intelligent lawn mower and the deceleration coefficient; and,
   determining a difference between the wheel rotation speed of the intelligent lawn mower and the wheel rotation speed by which the intelligent lawn mower reduces as the target wheel rotation speed of the intelligent lawn mower after the deceleration.

10. An apparatus for controlling an intelligent lawn mower, comprising:

    a detection module, configured to detect output torque of a mowing motor during working of the intelligent lawn mower; and
    a control module, configured to reduce a wheel rotation speed of the intelligent lawn mower if the output torque reaches a first set threshold, and control the intelligent lawn mower to operate based on the reduced wheel rotation speed.

11. An intelligent lawn mower, wherein the intelligent lawn mower automatically moves and works in a working region limited by a boundary line, and the intelligent lawn mower comprises a data acquisition sensor and a controller that are interconnected, wherein the data acquisition sensor is configured to acquire output torque of a mowing motor during working of the intelligent lawn mower, and the controller is configured to reduce a wheel rotation speed of the intelligent lawn mower when the output torque acquired by the data acquisition sensor reaches a first set threshold, and control the intelligent lawn mower to operate based on the reduced wheel rotation speed.

12. A computer device, comprising a memory and a processor, the memory storing a computer program, and the processor, implementing steps of the method according to any one of claims 1 to 9 when exe-

**EP 4 349 150 A1**

cuting the computer program.

102

| Detect output torque of a mowing motor during working of an intelligent lawn mower |
|---|

104

| Reduce a wheel rotation speed of the intelligent lawn mower if the output torque reaches a first set threshold, and control the intelligent lawn mower to operate based on a reduced wheel rotation speed |
|---|

FIG. 1

202

Determine a deceleration coefficient of a wheel rotation speed based on a set deceleration percentage of the wheel rotation speed, output torque, and a first set threshold if the output torque reaches the first set threshold

204

Determine a target wheel rotation speed after deceleration of an intelligent lawn mower according to the wheel rotation speed of the intelligent lawn mower and the deceleration coefficient

206

Control the wheel rotation speed of the intelligent lawn mower to reduce to the target wheel rotation speed based on a set deceleration slope

FIG. 2

102

Detect output torque of a mowing motor during working of an intelligent lawn mower

104

Reduce a wheel rotation speed of the intelligent lawn mower if the output torque reaches a first set threshold, and control the intelligent lawn mower to operate based on a reduced wheel rotation speed

106

Control the wheel rotation speed of the intelligent lawn mower to increase to a set wheel rotation speed if it is detected that the output torque of the mowing motor reaches a second set threshold

FIG. 3

402

Detect a blade rotation speed under driving of a mowing motor

404

Determine that output torque is not less than a first set threshold if the blade rotation speed is less than a target blade rotation speed

FIG. 4

502

Detection module

504

Control module

## FIG. 5

606

Data acquisition sensor

602

Mowing motor

604

Wheel driving motor

608

Controller

610

Recognition module

## FIG. 6

Processor

System bus

Operating system

Computer program

Non-volatile storage medium

Internal memory

Communication interface

Display screen

Input apparatus

Computer device

## FIG. 7

## INTERNATIONAL SEARCH REPORT

| International application No. |
| --- |
| **PCT/CN2022/096567** |

**A. CLASSIFICATION OF SUBJECT MATTER**

A01D 34/00(2006.01)i

According to International Patent Classification (IPC) or to both national classification and IPC

**B. FIELDS SEARCHED**

Minimum documentation searched (classification system followed by classification symbols)

A01D34

Documentation searched other than minimum documentation to the extent that such documents are included in the fields searched

Electronic data base consulted during the international search (name of data base and, where practicable, search terms used)

CNABS, CNTXT, CNKI, VEN, WPABS, ENTXT: 割草机, 扭矩, 转矩, 负载, 过载, 车速, 速度, 轮速, 检测, 阈值, 降低, 减小, 增大, 降速, 调速, 调节, 路径, 规划; mower, cropper, torque, load, speed, detect, threshold, adjust, route.

**C. DOCUMENTS CONSIDERED TO BE RELEVANT**

| Category* | Citation of document, with indication, where appropriate, of the relevant passages | Relevant to claim No. |
| --- | --- | --- |
| X | CN 110915404 A (JIANGSU WORLD PLANT-PROTECTING MACHINERY CO., LTD.) 27 March 2020 (2020-03-27)<br>description, paragraphs 26-48, and figures 1-5 | 1-6, 10-12 |
| X | CN 111837588 A (GLOBE (JIANGSU) CO., LTD.) 30 October 2020 (2020-10-30)<br>description, paragraphs 105-110, and figures 1-10 | 1-6, 10-12 |
| A | CN 112655353 A (ZHEJIANG SAFUN INDUSTRIAL CO., LTD.) 16 April 2021 (2021-04-16)<br>entire document | 1-12 |
| A | CN 101861781 A (POSITEC POWER TOOLS (SUZHOU) CO., LTD.) 20 October 2010 (2010-10-20)<br>entire document | 1-12 |
| A | JP 2020182402 A (KUBOTA CORPORATION) 12 November 2020 (2020-11-12)<br>entire document | 1-12 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 August 2022** | **23 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/096567**

| Patent document cited in search report | | | Publication date (day/month/year) | Patent family member(s) | | | Publication date (day/month/year) |
|---|---|---|---|---|---|---|---|
| CN | 110915404 | A | 27 March 2020 | WO | 2021103548 | A1 | 03 June 2021 |
| CN | 111837588 | A | 30 October 2020 | CN | 111837588 | B | 26 October 2021 |
| | | | | EP | 3949712 | A1 | 09 February 2022 |
| | | | | US | 2022039312 | A1 | 10 February 2022 |
| | | | | AU | 2021209348 | A1 | 24 February 2022 |
| CN | 112655353 | A | 16 April 2021 | None | | | |
| CN | 101861781 | A | 20 October 2010 | US | 2013167495 | A1 | 04 July 2013 |
| | | | | WO | 2010118703 | A1 | 21 October 2010 |
| | | | | EP | 2420130 | A1 | 22 February 2012 |
| | | | | CN | 101861781 | B | 03 April 2013 |
| | | | | EP | 2420130 | A4 | 25 September 2013 |
| JP | 2020182402 | A | 12 November 2020 | None | | | |

Form PCT/ISA/210 (patent family annex) (January 2015)